# EUROPÄISCHE PATENTSCHRIFT

(11) **EP 1 255 681 B1**
(45) Veröffentlichungstag und Bekanntmachung des Hinweises auf die Patenterteilung: **02.06.2004**
(21) Anmeldenummer: 01953014.6
(22) Anmeldetag: 27.01.2001
(51) Int. Cl.: B65D 75/00, B32B 3/14

(54) **STRECKFOLIE UND VERFAHREN ZUR HERSTELLUNG EINER STRECKFOLIE**
STRETCH FILM AND METHOD FOR PRODUCING A STRETCH FILM
FILM ETIRABLE ET PROCEDE DE FABRICATION D'UN FILM ETIRABLE

(30) Priorität: 18.02.2000 DE 10007614
(43) Veröffentlichungstag der Anmeldung: 13.11.2002
(73) Patentinhaber: G. + L. Heikaus Kunststoffverarbeitung und Verpackungen GmbH, 51674 Wiehl-Marienhagen (DE)
(72) Erfinder: GERD, Heikaus, 51588 Nümbrecht (DE); LOTHAR, Heikaus, 51588 Nümbrecht (DE)
(74) Vertreter: von Kirschbaum, Alexander, Dipl.-Ing.
(86) Internationale Anmeldenummer: PCT/EP2001/000901
(87) Internationale Veröffentlichungsnummer: WO 2001/060709

(56) Entgegenhaltungen:
- EP-A- 0 638 505
- EP-A- 0 716 019
- EP-A- 0 779 145
- US-A- 5 013 595

## Beschreibung

Die Erfindung betrifft eine Streckfolie sowie ein Verfahren zur Herstellung einer Streckfolie.

Streckfolien werden durch Vorstrecken einer Folie hergestellt. Durch das Vorstrecken der Folie wird deren Festigkeit erhöht. Ferner ergibt sich durch das Vorstrecken ein Memory-Effekt, der bewirkt, dass die Folie sich bei weiterem Strecken an ihren vorherigen Zustand erinnert, d.h. sich zusammenzieht. Streckfolien werden zum Verpacken von Gütern für den Versand genutzt. Insbesondere werden Streckfolien zum Zusammenbinden mehrerer Güter auf einer Palette o.dgl. verwendet. Hierzu werden die Güter auf einer Palette gestapelt und vollständig mit einer Streckfolie umwickelt, so dass die Güter sicher auf der Palette gehalten sind.

Durch unterschiedliche Spannungen in der Folie beim Umwickeln der Güter oder durch scharfe Kanten der Güter können derartige Streckfolien leicht an den Kanten einreißen. Dies führt aufgrund der Spannung in der Folie zum Abreißen der Folienbahn, so dass die Güter erneut umwickelt werden müssen. Um die Gefahr des Einreißens an den Außenkanten der Streckfolie zu verringern, ist es aus EP 0 728 102 bekannt, die beiden Außenkanten der Längsfolie nach innen einzufalten. Auch bei dieser Streckfolie können durch scharfe Kanten oder hervorstehende Ecken eines Kartons Löcher in der Folie hervorgerufen werden. Aufgrund der Spannung in Längsrichtung der Folie vergrößern sich diese Löcher über die gesamte Breite der Folie, so dass ein sicherer Halt der Güter auf einer Palette nicht mehr gewährleistet ist. Eine entsprechende Vorrichtung zum Falten der Außenkanten einer Folie nach innen ist auch aus EP 0 638 505 bekannt.

Aus US 501 3595 ist es ferner bekannt, eine herkömmliche Folienbahn durch Auflaminieren einer zweiten Folienbahn mit geringerer Breite zu verstärken. Um eine ausreichende Verstärkung erzielen zu können, wird hierbei als verstärkende zweite Folienbahn ein Halteband mit größerer Dicke als die Hauptfolie vorgeschlagen. Dieses Verfahren ist für vorgestreckte Folien nicht einsetzbar.

Aufgabe der Erfindung ist es, eine Streckfolie sowie ein Verfahren zur Herstellung einer Streckfolie zu schaffen, bei der die Gefahr des Einreißens verringert ist.

Die Lösung dieser Aufgabe erfolgt erfindungsgemäß durch die Ansprüche 1 bzw. 11.

Die erfindungsgemäße Streckfolie weist eine vorgestreckte Hauptfolie und in Längsrichtung der Hauptfolie verlaufende Verstärkungsstreifen auf. Erfindungsgemäß bestehen die Verstärkungsstreifen aus in Längsrichtung gefalteten Folienstreifen aus vorgestreckter Folie. Mit der Hauptfolie sind mehrere Verstärkungssteifen in Längsrichtung der Hauptfolie verbunden. Je nach Anzahl der Verstärkungsstreifen und in Abhängigkeit der Breite der Folie können die Abstände zwischen den Verstärkungsstreifen gewählt werden. Selbst ein Einreißen der Folie zwischen zwei Verstärkungsstreifen führt somit dazu, dass lediglich ein kleines Loch entsteht, das sich nicht über die gesamte Breite der Folie vergrößern kann.

Da die Verstärkungsstreifen gefaltete Folienstreifen sind, kann die Verstärkung der Hauptfolie durch die Anzahl der Faltungen bestimmt werden. Die Folienstreifen werden vorzugsweise zweimal, insbesondere viermal in Längsrichtung gefaltet.

Bei üblichen Folienbreiten von 400 bis 500 mm sind vorzugsweise mindestens drei zueinander parallele Verstärkungsstreifen mit der Hauptfolie verbunden. Durch das Vorsehen von mindestens drei Verstärkungsstreifen aus mindestens viermal in Längsrichtung gefalteten Folienstreifen kann die Haltekraft der Streckfolie um etwas das Fünffache erhöht werden. Dies ist insbesondere beim Verpacken von schweren Gütern vorteilhaft.

Bei einer besonders bevorzugten Ausführungsform der Streckfolie ist die Hauptfolie gelocht. Die Hauptfolie kann vor oder nach dem Verbinden mit den Verstärkungsstreifen gelocht werden. Vorzugsweise wird die Lochung nach dem Vorsehen der Verstärkungsstreifen vorgenommen, da dadurch die Gefahr des Reißens der Streckfolie beim Lochen verringert ist. Derartige gelochte Streckfolien mit Verstärkungsstreifen sind insbesondere zum Verpacken von Lebensmitteln geeignet, da ein Luftaustausch gewährleistet ist.

Um die Festigkeit der Folie zu erhöhen und ein sicheres Verbinden der Verstärkungsstreifen mit der Hauptfolie zu gewährleisten, ist die Hauptfolie vorzugsweise nur in den Bereichen zwischen den Verstärkungsstreifen gelocht.

Die Gefahr des Reißens auch bei einer gelochten Hauptfolie kann zusätzlich zu den Verstärkungsstreifen dadurch verringert werden, dass in der Hauptfolie mehrere in Längsrichtung verlaufende Lochreihen vorgesehen sind, die zueinander versetzt sind. Hiermit ist bei guter Belüftung der verpackten Güter eine große Festigkeit der Streckfolie erreicht.

Bei dem erfindungsgemäßen Verfahren zur Herstellung der mit Verstärkungsstreifen versehenen Streckfolie werden Folienstreifen aus einer ersten vorgestreckten Folie zugeführt. Anschließend werden durch mindestens einmaliges Falten dieser Folienstreifen in Längsrichtung Verstärkungsstreifen hergestellt. Hierauf wird eine zweite vorgestreckte Hauptfolie zugeführt und die Verstärkungsstreifen mit der Hauptfolie derart verbunden, dass die Verstärkungsstreifen parallel zueinander in Längsrichtung der Hauptfolie verlaufen.

Das Herstellen der Verstärkungsstreifen durch Falten von Folienstreifen hat insbesondere den Vorteil, dass die Hauptfolie und die Folienstreifen aus derselben Folie bestehen können und durch das Falten eine erhebliche Erhöhung der Festigkeit erzielt wird. Das Verwenden der gleichen Folie hat ferner den Vorteil, dass die Verstärkungsstreifen und die Hauptfolie einfach miteinander verbunden werden können.

Vorzugsweise werden die Folienstreifen durch Schneiden einer vorgestreckten Folie hergestellt. Es können somit zwei identische Folienrollen zur Herstellung der versteiften Streckfolie verwendet werden, wobei eine Folie als Hauptfolie dient und aus der anderen Folie die Verstärkungsstreifen hergestellt werden.

Bei einer besonders bevorzugten Ausführungsform des Verfahrens wird die Hauptfolie gelocht. Das Lochen der Hauptfolie kann vor oder nach dem Verbinden der Hauptfolie mit den Verstärkungsstreifen erfolgen. Vorzugsweise erfolgt das Lochen nach dem Verbinden mit den verstärkungsstreifen. Durch das Lochen der Hauptfolie ist die erfindungsgemäße Streckfolie besonders gut zum Verpacken von Lebensmitteln geeignet.

Vorzugsweise werden nur die zwischen den Verstärkungsstreifen liegenden Bereiche der Hauptfolie gelocht. Dadurch wird die Hauptfolie in den Bereichen, in denen die Verstärkungsstreifen mit der Hauptfolie verbunden werden, nicht geschwächt. Es ist andererseits insbesondere bei sehr kleinen Löchern möglich und verfahrenstechnisch vorteilhaft, die Hauptfolie vor dem Verbinden mit den Verstärkungsstreifen zu lochen.

Vorzugsweise wird die Lochung in der Hauptfolie so vorgenommen, dass zwischen zwei Verstärkungsstreifen mehrere in Längsrichtung der Hauptfolie verlaufende Lochreihen vorgesehen sind. Diese sind zur Erhöhung der Festigkeit der Streckfolie zueinander versetzt angeordnet. Durch eine derartige Lochung wird die Durchlüftung der verpackten Güter, insbesondere bei Lebensmitteln erhöht. Wenn besonders feste und reißsichere Streckfolien erforderlich sind, wird nur eine Lochreihe zwischen Verstärkungsstreifen vorgesehen. Eine weitere Erhöhung der Festigkeit der Streckfolie bei weiterhin gewährleisteter Durchlüftung kann dadurch erzielt werden, dass nur zwischen jedem zweiten Paar von Verstärkungsstreifen Löcher vorgesehen sind, so dass der Bereich zwischen den Verstärkungsstreifen abwechselnd gelocht und ungelocht ist.

Das Lochen der Folie kann beispielsweise durch ein Ausstanzen der Löcher erfolgen. Insbesondere bei dünnen Folien ist es möglich, die Lochung durch Wärmezufuhr vorzunehmen. Hierzu können beispielsweise geheizte Noppen eingesetzt werden, die eine Temperatur aufweisen, die über dem Schmelzpunkt der Folie, d. h. vorzugsweise über 200°C, besonders bevorzugt über 250°C erwärmt sind. Entsprechende beheizten Noppen, die vorzugsweise aus Aluminium bestehen, können an einer Walze vorgesehen sein, so dass das Lochen der Folie während des Transports der Folie über diese Walze erfolgt. Unmittelbar nach dem Lochen der Folie durch Wärmeeinwirkung ist vorzugsweise eine Luftkühlung vorgesehen. Das Vorsehen der Löcher durch Schmelzen der Folie hat ferner den Vorteil, dass durch das Schmelzen der Folie ein verstärkter Lochrand entsteht. Hierdurch ist ein Einreißen der Folie an den Löchern vermieden.

Zum Verbinden der Verstärkungsstreifen mit der Hauptfolie kann mindestens eine der Folien Additive enthalten. Durch derartige Additive wird die Verbindung zwischen den beiden Folien, d.h. der Hauptfolie und den Verstärkungsstreifen verstärkt.

Vorzugsweise weisen die Hauptfolie und die Verstärkungsstreifen eine unterschiedliche Temperatur auf, so dass die Folien bereits aufgrund der unterschiedlichen Temperatur aneinander haften und eine ausreichend starke Verbindung eingehen.

Besonders vorteilhaft ist die Verbindung der Verstärkungsstreifen und der Hauptfolie durch Wärmezufuhr. Hierbei wird zumindest einer von mehreren Druckwalzen, die die Verstärkungsstreifen und die Hauptfolie zusammendrücken, Wärme zugeführt. Um die Eigenschaften der Streckfolie nicht zu beeinträchtigen, darf die Wärmezufuhr nicht so hoch sein, dass die beiden Folien miteinander verschmelzen oder verschweißen.

Bei den verwendeten Folien handelt es sich vorzugsweise um Folien, die im Schlauchblasverfahren hergestellt worden sind oder um flachvergossene Folien. Das Folienmaterial kann aus einer Gruppe gewählt werden, die aus Polyethylen, Polyvinylchlorid, Ethylen-Vynil-Acetat, Ethylen-Methyl-Acetat und Polyethylen gebildet wird.

Um möglichst große Folienlängen verarbeiten zu können, kann die Vorrichtung zur Herstellung einer verstärkten Streckfolie, die vorzugsweise eine Lochung aufweist mit einer Vorrichtung zum Strecken der Folie kombiniert werden. Die Vorrichtung zum Verstärken und Lochen der Folie ist sodann unmittelbar der Vorrichtung zum Strecken der Folie nachgeordnet. Ein Aufwickeln der gestreckten Folie vor dem Verstärken und Lochen ist hierbei nicht erforderlich.

Nachfolgend wird die Erfindung anhand einer bevorzugten Ausführungsform unter Bezugnahme auf die anliegenden Zeichnungen näher erläutert.

Es zeigen:

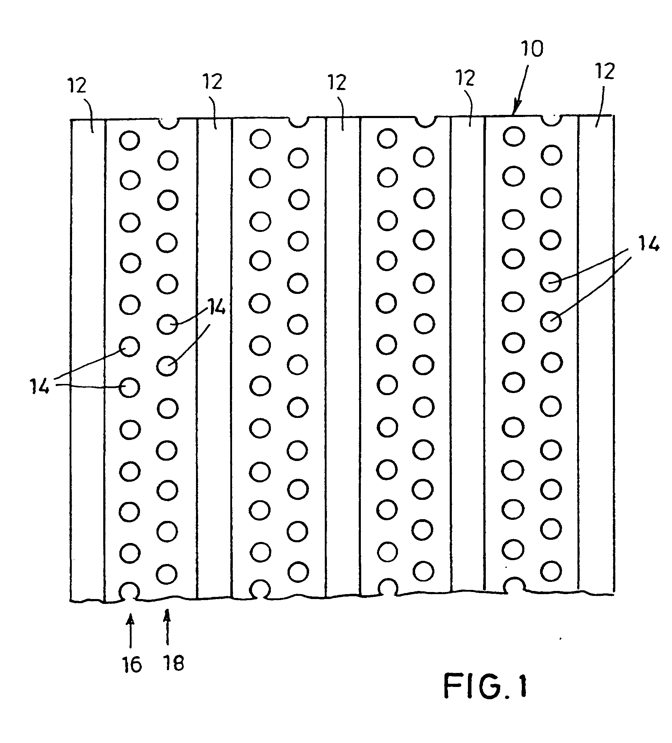

- Fig. 1: eine schematische Draufsicht einer erfindungsgemäßen Streckfolie,
- Fign.2a und 2b: eine schematische Darstellung einer Vorrichtung zur Herstellung der erfindungsgemäßen Streckfolie,
- Fig. 3a: schematische Schnittansichten eines gefalteten Folienstreifens entlang der Linie I in Fig. 2a,
- Fig. 3b: schematische Schnittansichten eines gefalteten Folienstreifens entlang der Linie II in Fig. 2a,
- Fig. 3c: schematische Schnittansichten eines gefalteten Folienstreifens entlang der Linie III in Fig. 2a, und
- Fig. 3d: schematische Schnittansichten eines gefalteten Folienstreifens entlang der Linie IV in Fig. 2a.

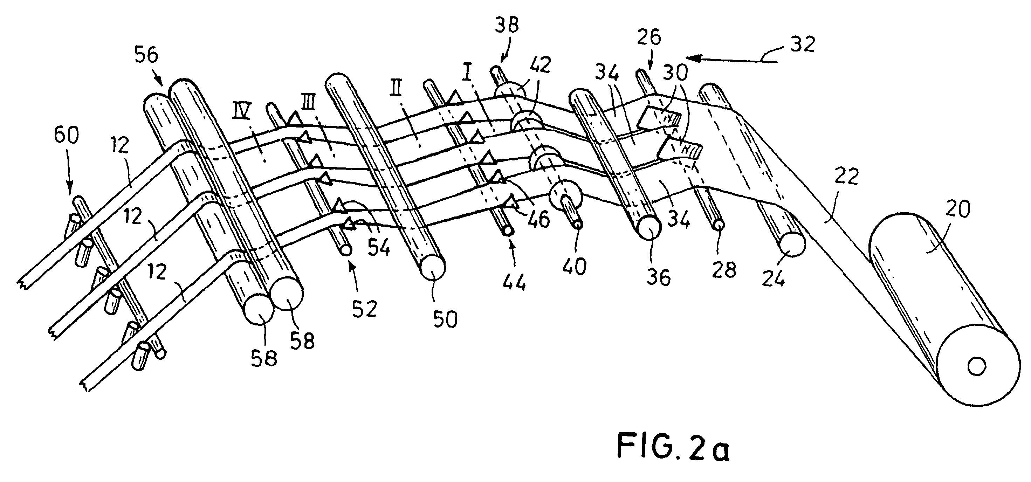

Die Streckfolie weist eine Hauptfolie 10 auf, bei der es sich um eine vorgestreckte Folie handelt. Mit der Hauptfolie 10 sind in Längsrichtung der Hauptfolie mehrere Verstärkungsstreifen 12 verbunden. Die Verstärkungsstreifen 12 bestehen aus in Längsrichtung gefalteten Folienstreifen 34 (Fig. 2a) aus ebenfalls vorgestreckter Folie. Zwischen zwei benachbarten Verstärkungsstreifen 12 sind jeweils zwei eine Anzahl von Löchern 14 aufweisende Lochreihen 16,18 vorgesehen. Die Löcher 14 der Lochreihe 16 sind zu den Löchern 14 der Lochreihe 18 jeweils um den halben Abstand zwischen zwei benachbarten Löchern 14 einer Lochreihe 16,18 versetzt. Die Löcher 14 der Lochreihe 16 sind somit gegenüber den Löchern 14 der Reihe 18 auf Lücke angeordnet.

Die Verstärkungsstreifen 12 bestehen aus demselben Material wie die Hauptfolie 10. Um eine erhöhte Verstärkung zu erreichen, ist die Folie zur Herstellung der Verstärkungsstreifen 12 mehrfach gefaltet, so dass die Verstärkungsstreifen 12 mehrlagig sind. Vorzugsweise weist die Folie, aus der die Verstärkungsstreifen 12 hergestellt werden, vor dem Schneiden in einzelne zu faltende Streifen dieselbe Breite wie die Hauptfolie 10 auf. Es können somit identische Folien einerseits als Hauptfolie 10 und andererseits zur Herstellung der Verstärkungsstreifen 12 verwendet werden.

Zur Herstellung der Verstärkungsstreifen 12 (Fig. 2a) wird von einer Stammrolle 20 eine erste vorgestreckte Folienbahn 22 abgerollt. Die Folienbahn 22 wird über eine Umlenkrolle 24 einer Schneideinheit 26 zugeführt.

Die Schneideinheit weist auf einer Halterung 28 angeordnete Schneidmesser 30 auf. Durch Transport der Folienbahn 22 in Richtung des Pfeils 32 wird die Folienbahn 22 durch die Schneidmesser 30 in einzelne Folienstreifen 34 zerschnitten.

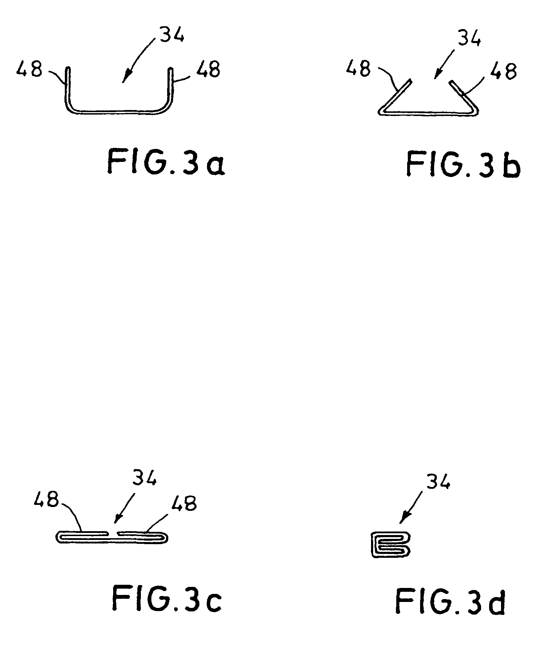

Die Folienstreifen 34 werden von einer Umlenkrolle 36 einer Kurvenrolle 38 zugeführt. Die Kurvenrolle 38 weist auf einer Welle 40 drehbare Kurvenelemente 42 auf. Durch die Kurvenelemente 42 und die Spannung in den Folienstreifen 34 werden die äußeren Längskanten der Folienstreifen 34 in der Figur nach oben geklappt, so dass jede Folienbahn 34 im Querschnitt im wesentlichen U-förmig ist (Fig. 3a).

Anschließend werden die im Querschnitt U-förmigen Folienbahnen 34 einer Falteinheit 44 zugeführt. Die Falteinheit 44 weist Formstäbe 46 auf. Die Formstäbe 46 sind quer zur Laufrichtung 32 der Folienstreifen ausgerichtet und schräggestellt. Zur Einstellung der Breite des gefalteten Bereichs sind die Formstäbe quer zur Laufrichtung 32 der Folienstreifen verstellbar. Dreiecke. Beim Transport der Folienstreifen 34 in Laufrichtung 32 werden die äußeren Schenkel 48 (Fig. 3a) der U-förmigen Folienstreifen 34 nach innen geklappt. Dadurch weist die Folienbahn 34 den in Fig. 3b dargestellten Querschnitt auf.

Im nächsten Schritt werden die Foliensteifen 34 derart um eine Umlenkrolle geführt, dass die äußeren Schenkel 48 der Folienstreifen 34 in Richtung der Umlenkrolle 50 weisen. Hierdurch werden die äußeren Schenkel 48 auf den zwischen den Schenkeln 48 befindlichen Bereich des Folienstreifens 34 gedrückt (Fig. 3c).

Von der anschließenden Falteinheit 52, die ebenfalls Formstäbe 54 aufweist, werden die Folienbahnen 34 erneut in Längsrichtung gefaltet, so dass sie die in Fig. 3d dargestellte Form aufweisen. Anschließend wird der Folienstreifen 34 in einer Druckeinheit zusammengepresst, so dass vierfach gefaltete Verstärkungsstreifen 12 entstehen. Die Druckeinheit 56 weist zwei Druckrollen 58 auf, die mit der erforderlichen Kraft gegeneinander drücken. Dadurch werden Lufteinschlüsse aus den Verstärkungsstreifen 12 herausgedrückt und die einzelnen Folienlagen miteinander verbunden.

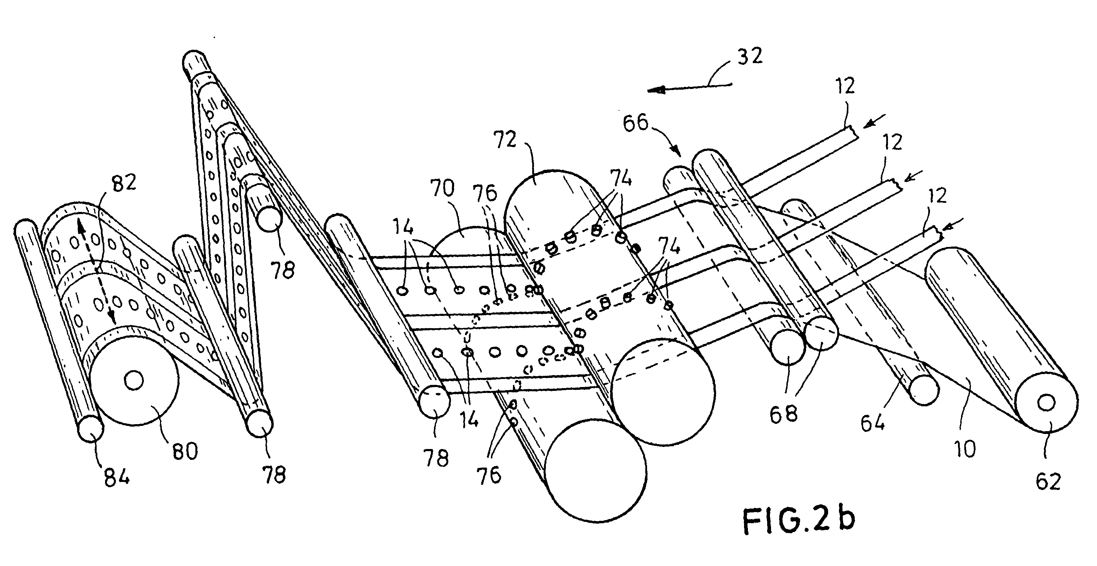

Von der Druckeinheit 56 werden die Folienstreifen 12 über Führungsrollen 60 in den Bereich der Vorrichtung geführt, in dem die Verstärkungsstreifen 12 mit der Hauptfolie 10 verbunden werden (Fig. 2b).

Als Hauptfolie 10 wird eine zweite vorgestreckte Folie von einer Stammrolle 62 abgewickelt und über eine Umlenkrolle 64 einer Druckeinheit 66 zugeführt. Die Verstärkungsstreifen 12 werden parallel zur Längsrichtung der Hauptfolie 10 und jeweils parallel zueinander ebenfalls der Druckeinheit 66 zugeführt. Die Druckeinheit 66 weist entsprechend der Druckeinheit 56 zwei mit vorgegebener Kraft gegeneinander drückende Rollen 68 auf. Die Verstärkungsstreifen 12 werden mit der Hauptfolie 10 dadurch verbunden, dass entweder die Verstärkungsstreifen 12 und/oder die Hauptfolie 10 ein Additiv enthält. Ebenso können die Druckrollen 68 der Druckeinheit 66 beheizt werden, so dass aufgrund der Wärme eine Verbindung der Verstärkungsstreifen 12 mit der Hauptfolie 10 stattfindet. Hierbei muss darauf geachtet werden, dass durch die Temperatur der .Druckrollen 68 kein Aufschmelzen der Verstärkungsstreifen 12 oder der Hauptfolie 10 stattfindet.

Im nachfolgenden Schritt werden durch Lochwalzen 70,72 zwischen den Verstärkungsstreifen 12 in die Hauptfolie 10 Löcher eingebracht. Hierzu weist die Lochwalze 72 um den Umfang verteilte zylindrische Erhebungen 74 auf. Da im dargestellten Ausführungsbeispiel eine Streckfolie mit drei Verstärkungsstreifen 12 und dementsprechend zwei Lochreihen dargestellt ist, weist die Lochwalze 72 zwei Reihen von zylindrischen Erhebungen 74 auf. Die korrespondierende Lochwalze 70 weist zu den zylindrischen Erhebungen 74 korrespondierende zylindrische Vertiefungen 76 auf. Es handelt sich hierbei ebenfalls um zwei reihen zylindrischer Vertiefungen 76. Eine der beiden oder beide Lochwalzen 70,72 sind beheizt. Durch das Beheizen erfolgt ein Einschmelzen der Löcher 14 in die Hauptfolie 10. Die Löcher 14 werden demzufolge nicht gestanzt, so dass kein Folienabfall entsteht.

Die Lochwalze 70 kann auch entfallen. Die Lochung erfolgt sodann allein aufgrund der Lochwalze 72 mit Erhebungen 74. Aufgrund der Spannung in der Folie weicht die Folie nur geringfügig von der Lochwalze 72 ab, so dass sie zur Erzeugung der Lochung ausreichend an der Lochwalze 72 bzw. den Erhebungen 74 anliegt.

Neben kreisrunden Löchern 14 kann auch jede beliebige andere Lochform gewählt werden. Vorteilhaft ist insbesondere eine ovale oder eliptische Lochform, deren längere Halbachse quer zur Längsrichtung der Folienbahn verläuft, so dass die kurze Halbachse parallel zu der in den Streckfolien vorherrschenden Spannungsrichtung ausgerichtet ist.

Nach dem Einbringen der Löcher 14 in die Hauptfolie 10 wird die Folienbahn über Umlenkrollen 78 mehrfach umgelenkt. Hierdurch ist eine Kühlstrecke gebildet, in der die Folienbahn wieder so weit abgekühlt wird, dass sie beim anschließenden Aufrollen nicht zusammenklebt. Nach der Kühlstrecke wird die Folienbahn auf eine Rolle 80 aufgewickelt. Die Rolle 80 bewegt sich senkrecht zur Transportrichtung der Folienbahn in Richtung des Pfeils 82, d.h. in horizontaler Richtung. Dadurch ist sichergestellt, dass die Verstärkungsstreifen 12 beim Aufwickeln auf die Rolle 80 nicht vollständig übereinander angeordnet werden. Durch die Hin- und Herbewegung der Aufwickelrolle 80 weist die Rolle über die gesamte Breite eine annähernd gleiche Dicke auf. Um ein gleichmäßiges Aufwickel auf die Rolle 80 sicherzustellen, ist ferner eine Andrückrolle 84 vorgesehen.

## Patentansprüche

1. Verfahren zur Herstellung einer Streckfolie mit den Schritten:
- Zuführen von Folienstreifen (34) aus einer ersten vorgestreckten Folie (22),
- Herstellen von Verstärkungsstreifen (12) durch mindestens einmaliges Falten dieser Folienstreifen (34) in Längsrichtung,
- Zuführen einer zweiten vorgestreckten Hauptfolie (10) und
- Verbinden der Verstärkungsstreifen (12) mit der Hauptfolie (10) derart, dass die Verstärkungsstreifen (12) parallel zueinander in Längsrichtung der Hauptfolie (10) verlaufen.

2. Verfahren nach Anspruch 1, bei welchem die Folienstreifen (34) durch Schneiden einer vorgestreckten Folie (22) hergestellt werden.

3. Verfahren nach Anspruch 1 oder 2, bei welchem die Hauptfolie (10) gelocht wird.

4. Verfahren nach Anspruch 1 oder 3, bei welchem die Hauptfolie (10) derart gelocht wird, dass nur die zwischen den Verstärkungsstreifen (12) liegenden Bereiche der Hauptfolie (10) gelocht wird.

5. Verfahren nach Anspruch 3 oder 4, bei welchem zwischen zwei Verstärkungsstreifen (12) mehrere in Längsrichtung der Hauptfolie (10) verlaufende Lochreihen (16,18) vorgesehen werden, die zueinander versetzt sind.

6. Verfahren nach einem der Ansprüche 1-5, bei welchem mindestens eine der Folien (10,22) Additive enthält, welche die Verbindung zwischen den Folien verstärkt.

7. Verfahren nach einem der Ansprüche 1-6, bei welchem zum Verbinden von Hauptfolie (10) und Verstärkungsstreifen (12) die Hauptfolie (10) und die Verstärkungsstreifen (12) unterschiedliche Temperaturen aufweisen.

8. Verfahren nach einem der Ansprüche 1-7, bei welchem die Hauptfolie (10) und die Verstärkungsstreifen (12) durch Wärmezufuhr verbunden werden.

9. Verfahren nach Anspruch 1, bei welchem die Folienstreifen (34) zweimal, vorzugsweise viermal gefaltet werden.

10. Verfahren nach einem der Ansprüche 1-9, bei welchem mindestens drei Verstärkungsstreifen (12) parallel zueinander vorgesehen werden.

11. Streckfolie mit in Längsrichtung einer zweiten vorgestreckten Hauptfolie (10) verlaufenden Verstärkungsstreifen (12) aus einer ersten vorgestreckten Folie (22),
wobei die Verstärkungsstreifen (12) in Längsrichtung gefaltete Folienstreifen (34) aus der ersten vorgestreckten Folie (22) sind.

12. Streckfolie nach Anspruch 11, **dadurch gekennzeichnet, dass** die Hauptfolie (10) gelocht ist.

13. Streckfolie nach Anspruch 12, **dadurch gekennzeichnet, dass** die Hauptfolie (10) nur in den Bereichen zwischen den Verstärkungsstreifen (12) gelocht ist.

14. Streckfolie nach Anspruch 12 oder 13, **dadurch gekennzeichnet, dass** zwischen zwei Verstärkungsstreifen (12) in der Hauptfolie (10) mehrere in Längsrichtung verlaufende Lochreihen (16,18) vorgesehen sind, die zueinander versetzt sind.

15. Streckfolie nach einem der Ansprüche 11-14, **dadurch gekennzeichnet, dass** die Verstärkungsstreifen (12) aus zweimal, vorzugsweise viermal in Längsrichtung gefalteten Folienstreifen (34) bestehen.

16. Streckfolie nach einem der Ansprüche 11-15, **dadurch gekennzeichnet, dass** mindestens drei zueinander parallele Verstärkungsstreifen (12) vorgesehen sind.

17. Verwenden einer Streckfolie nach einem der Ansprüche 11-16 zum Verpacken von Lebensmitteln.

18. Verwenden der Streckfolie nach einem der Ansprüche 11-16 zum Umwickeln einer Palettenladung.

## Claims

1. A method for producing a stretch film, comprising the following steps:
- supply of film strips (34) from a first prestretched film (22),
- generating reinforcement strips (12) by folding these film strips (34) at least once in longitudinal direction,
- supply of a further prestretched main film (10), and
- connecting the reinforcement strips (12) to the main film (10) in such a manner that the reinforcement strips (12) extend in parallel to each other in the longitudinal direction of the main film (10).

2. The method according to claim 1 wherein the film strips (34) are generated by cutting a prestretched film (22).

3. The method according to claim 1 or 2 wherein the main film (10) is perforated.

4. The method according to claim 1 or 3 wherein the main film (10) is perforated in such a manner that perforations are formed only in the regions of the main film (10) between the reinforcement strips (12).

5. The method according to claim 3 or 4 wherein, between two reinforcement strips (12), a plurality of mutually staggered rows of holes (16,18) are formed to extend in the longitudinal direction of the main film (10).

6. The method according to any one of claims 1-5 wherein at least one of the films (10,22) includes additives for intensifying the connection between the films.

7. The method according to any one of claims 1-6 wherein, for connecting the main film (10) and the reinforcement strips (12), the main film (10) and the reinforcement strips (12) have different temperatures.

8. The method according to a any one of claims 1-7 wherein the main film (10) and the reinforcement strips (12) are connected by application of heat.

9. The method according to claim 1 wherein the film strips (34) are folded twice and preferably four times.

10. The method according to a any one of claims 1-9 wherein at least three reinforcement strips (12) are provided in parallel to each other.

11. A stretch film, comprising reinforcement strips (12) extending in the longitudinal direction of a second prestretched main film (10) and made of a first prestretched main film (22), the reinforcement strips (12) being film strips (34) made of the first prestretched film (22) which have been folded in the longitudinal direction.

12. The stretch film according to claim 11, **characterized in that** the main film (10) is perforated.

13. The stretch film according to claim 12, **characterized in that** the main film (10) is perforated only in the regions between the reinforcement strips (12).

14. The stretch film according to claim 12 or 13, **characterized in that**, between two reinforcement strips (12), the main film (10) is provided with a plurality of mutually staggered rows of holes (16,18) extending in the longitudinal direction.

15. The stretch film according to any one of claim 11-14, **characterized in that** the reinforcement strips (12) comprise film strips (34) which have been folded twice and preferably four times in the longitudinal direction.

16. The stretch film according to any one of claim 11-15, **characterized in that** at least three mutually parallel reinforcement strips (12) are provided.

17. Use of a stretch film according to any one of claims 11-16 for the packing of food items.

18. Use of a stretch film according to any one of claims 11-16 for wrapping a pallet load.

## Revendications

1. Procédé de fabrication d'un film étirable comprenant les étapes consistant à :
- amener des bandes de film (34) provenant d'un premier film préétiré (22),
- fabriquer des bandes de renforcement (12) en pliant au moins une fois ces bandes de film (34) dans le sens longitudinal,
- amener un deuxième film principal préétiré (10) et
- raccorder les bandes de renforcement (12) au film principal (10) de telle sorte que les bandes de renforcement (12) s'étendent parallèles les unes aux autres dans le sens longitudinal du film principal (10).

2. Procédé selon la revendication 1, dans lequel les bandes de film (34) sont fabriquées en coupant un film préétiré (22).

3. Procédé selon la revendication 1 ou 2, dans lequel le film principal (10) est perforé.

4. Procédé selon la revendication 1 ou 3, dans lequel le film principal (10) est perforé de telle sorte que seules les zones du film principal (10) situées entre les bandes de renforcement (12) sont perforées.

5. Procédé selon la revendication 3 ou 4, dans lequel on prévoit, entre deux bandes de renforcement (12), plusieurs rangées de perforations (16, 18) s'étendant dans le sens longitudinal du film principal (10), décalées les unes par rapport aux autres.

6. Procédé selon l'une quelconque des revendications 1 à 5, dans lequel au moins l'un des films (10, 22) contient des additifs renforçant le raccordement entre les films.

7. Procédé selon l'une quelconque des revendications 1 à 6, dans lequel le film principal (10) et les bandes de renforcement (12) présentent des températures différentes pour le raccordement du film principal (10) et des bandes de renforcement (12).

8. Procédé selon l'une quelconque des revendications 1 à 7, dans lequel le film principal (10) et les bandes de renforcement (12) sont raccordés par apport de chaleur.

9. Procédé selon la revendication 1, dans lequel les bandes de film (34) sont pliées deux fois, de préférence quatre fois.

10. Procédé selon l'une quelconque des revendications 1 à 9, dans lequel on prévoit au moins trois bandes de renforcement (12) parallèles les unes aux autres.

11. Film étirable comprenant des bandes de renforcement (12) provenant d'un premier film préétiré (22), qui s'étendent dans le sens longitudinal d'un deuxième film principal (10) préétiré, les bandes de renforcement (12) étant des bandes de film (34) provenant du premier film préétiré (22) pliées dans le sens longitudinal.

12. Film étirable selon la revendication 11, **caractérisé en ce que** le film principal (10) est perforé.

13. Film étirable selon la revendication 12, **caractérisé en ce que** le film principal (10) n'est perforé que dans les zones situées entre les bandes de renforcement (12).

14. Film étirable selon la revendication 12 ou 13, **caractérisé en ce que** l'on prévoit plusieurs rangées de perforations (16, 18), s'étendent dans le sens longitudinal entre deux bandes de renforcement (12) dans le film principal (10), décalées les unes par rapport aux autres.

15. Film étirable selon l'une quelconque des revendications 11 à 14, **caractérisé en ce que** les bandes de renforcement (12) sont constituées de bandes de film (34) pliées deux fois, de préférence quatre fois, dans le sens longitudinal.

16. Film étirable selon l'une quelconque des revendications 11 à 15, **caractérisé en ce que** l'on prévoit au moins trois bandes de renforcement (12) parallèles les unes aux autres.

17. Utilisation d'un film étirable selon l'une quelconque des revendications 11 à 16 pour l'emballage de produits alimentaires.

18. Utilisation du film étirable selon l'une quelconque des revendications 11 à 16 pour envelopper un chargement sur palette.
